# FASCICULE DE BREVET EUROPEEN

(11) **EP 2 350 571 B1**
(45) Date de publication et mention de la délivrance du brevet: **20.04.2016**
(21) Numéro de dépôt: 09755984.3
(22) Date de dépôt: 07.10.2009
(51) Int. Cl.: G01D 5/244

(54) **DISPOSITIF MAGNETIQUE DE DETERMINATION DE POSITION ANGULAIRE PRODUISANT UN SIGNAL SINUSOÏDAL ET MACHINE ELECTRIQUE TOURNANTE POLYPHASEE COMPRENANT UN TEL DISPOSITIF**
MAGNETISCHE EINRICHTUNG ZUR BESTIMMUNG EINER WINKELPOSITION UND ZUM ERZEUGEN EINES SINUSFÖRMIGEN SIGNALS UND ELEKTRISCHE MEHRPHASEN-DREHMASCHINE MIT EINER SOLCHEN EINRICHTUNG
MAGNETIC DEVICE FOR DETERMINING AN ANGULAR POSITION AND GENERATING A SINUSOIDAL SIGNAL, AND MULTIPHASE ROTARY ELECTRIC MACHINE INCLUDING SUCH A DEVICE

(30) Priorité: 10.10.2008 FR 0856891
(43) Date de publication de la demande: 03.08.2011
(73) Titulaire: Valeo Equipements Electriques Moteur, 94046 Créteil Cedex (FR)
(72) Inventeur: EL BARAKA, Khadija, F-77600 Bussy St Georges (FR); DUBUS, Jean-Marc, F-77380 Combs La Ville (FR); RAKOTOVAO, Mamy, F-94400 Vitry sur Seine (FR); MASFARAUD, Julien, F-75010 Paris (FR)
(86) Numéro de dépôt international: PCT/FR2009/051913
(87) Numéro de publication internationale: WO 2010/040956

(56) Documents cités:
- EP-A- 0 611 952
- EP-A- 0 949 510
- FR-A- 2 872 644
- FR-A1- 2 790 549

## Description

### DOMAINE TECHNIQUE DE L'INVENTION.

La présente invention concerne un dispositif magnétique de détermination de position angulaire produisant un signal comportant une composante alternative se rapprochant d'une sinusoïde.

Ce dispositif est particulièrement destiné à la détermination d'une position angulaire d'un rotor d'une machine électrique tournante polyphasée.

L'invention concerne donc également une machine électrique tournante polyphasée comprenant un tel dispositif.

### ARRIERE PLAN TECHNOLOGIQUE DE L'INVENTION.

La mise en oeuvre de capteurs à effet Hall ou à magnétorésistance dans des dispositifs de détermination de position angulaire est bien connue de l'état de la technique, notamment aux fins du pilotage de certaines machines électriques tournantes utilisées dans l'industrie automobile.

Un exemple de ces dispositifs est donné dans la demande de brevet internationale WO2006/010864 par la société VALEO EQUIPEMENTS ELECTRIQUES MOTEUR.

Les signaux fournis par les capteurs comportent généralement un fort taux d'harmoniques, doivent parfois traités pour obtenir des signaux sinusoïdaux autorisant un meilleur pilotage d'une machine électrique polyphasée.

Selon l'enseignement de la demande précitée, certaines combinaisons linaires particulières des signaux bruts issus des capteurs sont exemptes d'harmoniques, et proches de la forme d'onde sinusoïdale idéale.

Dans le brevet américain US6720763 décrivant également un résolveur, une cible magnétique, constituée d'un disque ou d'un anneau magnétique multipolaire, semble créer au voisinage des capteurs un champ magnétique apte à produire en sortie des signaux sinusoïdaux sans traitement supplémentaire.

Toutefois, aucune information précise concernant le degré de pureté des signaux sinusoïdaux obtenus n'est divulguée.

De plus, il a été constaté expérimentalement par la demanderesse que ce degré de pureté, ou le taux d'harmoniques, de ces signaux était sensible aux dispersions d'assemblage et aux tolérances mécaniques des différents éléments du dispositif, aux dispersions des caractéristiques du matériau magnétique de la cible, et à la température de fonctionnement.

Sur ces points, cruciaux en vue d'une application industrielle, le brevet américain précité est également muet.

Par EP0611952 A1, il est connu un détecteur de position qui permet d'améliorer la précision de détection d'une position de référence en stabilisant le signal de sortie fourni par des transducteurs magnéto-électriques. Dans ce détecteur, un rotor comporte une surface aimantée ayant une alternance de pôles magnétiques différents et une partie de position de référence dans laquelle des pôles magnétiques prévus sur la surface aimantée sont partiellement omis. Dans ce détecteur, un capteur angulaire comporte des éléments de transduction magnéto-électriques qui sont disposés en regard à la surface aimantée du rotor et délivre en sortie un signal de tension qui est fonction de l'intensité du champ magnétique sur la surface aimantée du rotor, du fait de la rotation de celui-ci. Dans ce détecteur, un circuit de mise en forme de signal et un circuit de traitement de signal impulsionnel mettent en forme le signal de tension fourni par le capteur angulaire et génèrent un signal impulsionnel d'angle de rotation et un signal impulsionnel de position de référence à partir du signal remis en forme. La partie de position de référence est prévue de telle manière que l'intensité de champ magnétique dans celle-ci peut se situer dans la région de champ magnétique de saturation des éléments de transduction magnéto-électriques.

Par FR2790549 A1, il est connu un capteur magnétique de position, linéaire ou rotatif, comportant un stator et au moins une partie mobile selon au moins une direction OX, avec une course utile Xc. Le stator est composé d'au moins deux pièces en matériau magnétique doux définissant au moins un entrefer secondaire dans lequel est logée au moins une sonde magnéto-sensible pour mesurer la variation d'induction dans cet entrefer secondaire, chaque pièce statorique présentant une longueur Xs dans la direction OX au moins égale à Xc. Les aimants d'une partie mobile sont prolongés sur au moins un bord par une pièce ferromagnétique mobile, dans la direction de l'aimantation d'un aimant, et se déplacent parallèlement aux pièces ferromagnétiques statoriques à une distance minimale constante et présentant une aimantation perpendiculaire à OX et une longueur dans la direction du déplacement OX au moins égale à Xc.

Par ailleurs, il est également connu un dispositif de détermination angulaire, connu également sous le nom de « résolveur », qui est placé en bout d'arbre du rotor d'un alterno-démarreur et qui fournit des signaux représentatifs de la position angulaire de ce rotor.

### DESCRIPTION GENERALE DE L'INVENTION.

Le but de la présente invention est donc de pallier les inconvénients ci-dessus en sélectionnant les caractéristiques optimales d'un dispositif magnétique de détermination de position angulaire produisant un signal sinusoïdal du type de ceux comprenant :
- un anneau magnétique multipolaire mobile en rotation autour d'un axe et créant un champ magnétique variable en fonction d'un angle de rotation;
- un capteur magnétique placé dans ce champ magnétique et générant ce signal sinusoïdal ;
- un entrefer constitué par un éloignement du capteur d'une distance E de l'anneau magnétique dans un plan radial.

De manière remarquable, ce but est atteint quand un premier rapport e/E d'une épaisseur e de l'anneau magnétique multipolaire dans une direction radiale à l'entrefer E est compris entre 0,4 et 2,3 et un second rapport h/e d'une hauteur h de l'anneau dans une direction axiale à l'épaisseur e est compris entre 1,5 et 8.

Fort avantageusement, selon l'invention, cette épaisseur e est comprise entre 1 mm et 5mm, et, de préférence, l'entrefer E est compris entre 1 mm et 4mm.

On tire aussi bénéfice du fait qu'un rayon extérieur de l'anneau magnétique multipolaire est compris préférentiellement entre 40mm et 80mm.

Cet anneau est avantageusement constitué d'élasto-ferrite. Un niveau de magnétisation en surface est compris de préférence entre 500Gs et 800Gs à 25° C.

Le dispositif magnétique de détermination de position angulaire selon l'invention produit un signal sinusoïdal ayant une valeur crête-crête comprise fort avantageusement entre 1V et 4V.

L'invention concerne aussi une machine électrique tournante polyphasée comprenant un stator et un rotor, remarquable en ce qu'elle comprend en outre un dispositif magnétique de détermination de position angulaire produisant un signal sinusoïdal, dont le capteur est solidaire du stator et dont l'anneau magnétique mulltipolaire est fixé axialement sur le rotor, et présentant les caractéristiques optimisées précédentes.

Ces quelques spécifications essentielles auront rendu évidents pour l'homme de métier les avantages apportés par le dispositif magnétique de détermination de position angulaire selon l'invention par rapport à l'état de la technique antérieur, au plan de la réduction du taux d'harmoniques du signal sinusoïdal produit.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1a** est une vue générale schématique du dispositif magnétique de détermination de position angulaire produisant un signal sinusoïdal selon l'invention. La **Figure 1b** montre une coupe radiale partielle de l'anneau magnétique multipolaire du dispositif de la Figure 1 a.
La **Figure 2a** montre le niveau de magnétisation mesuré par le capteur en fonction de l'éloignement de l'anneau magnétique multipolaire pour deux décalages axiaux.
La **Figure 2b** montre le niveau de magnétisation mesuré par le capteur en fonction du décalage axial du capteur pour un entrefer constant et pour plusieurs diamètres de l'anneau magnétique multipolaire.
La **Figure 3** montre le niveau de magnétisation mesuré par le capteur en fonction de l'entrefer et du décalage axial du capteur pour deux températures ambiantes différentes.
La **Figure 4a** montre le niveau de magnétisation mesuré par le capteur en fonction de la position angulaire pour deux épaisseurs radiales différentes de l'anneau magnétique multipolaire.
La **Figure 4b** illustre schématiquement deux anneaux magnétiques multipolaires ayant deux épaisseurs radiales différentes dont les effets sont montrés sur la Figure 4a.
Les **Figures 5a et 5b** illustrent les effets sur le niveau de magnétisation mesuré par le capteur de la dispersion d'assemblage mécanique de l'entrefer.
La **Figure 6** illustre les effets sur le niveau de magnétisation mesuré par le capteur de la dispersion d'assemblage mécanique du positionnement axial du capteur pour deux rapports hauteur axiale/ épaisseur radiale différents de l'anneau magnétique multipolaire.
Les **Figures 7a et 7b** représentent graphiquement les variations du niveau de magnétisation mesuré par le capteur en fonction de la position angulaire de l'anneau magnétique multipolaire pour une première et seconde valeurs de l'entrefer, respectivement, et pour différentes épaisseurs radiales.
Les **Figures 8a et 8b** représentent graphiquement l'atténuation des harmoniques selon leurs rangs en fonction de l'épaisseur radiale de l'anneau magnétique multipolaire pour les première et seconde valeurs de l'entrefer, respectivement.
La **Figure 9** représente graphiquement le taux de distorsion harmonique du signal produit par le capteur en fonction de l'épaisseur radiale de l'anneau magnétique multipolaire et de l'entrefer du dispositif selon l'invention.
La **Figure 10a** montre une machine électrique tournante polyphasée selon l'invention comprenant un dispositif magnétique de détermination de position angulaire représenté sur la Figure 1 a.
La **Figure 10b** montre les détails d'agencement dans la machine électrique tournante polyphasée montrée sur la Figure 10a de trois exemplaires du dispositif magnétique de détermination de position angulaire selon l'invention représenté sur la Figure 1 a.

### DESCRIPTION DES MODES DE REALISATION PREFERES DE L'INVENTION.

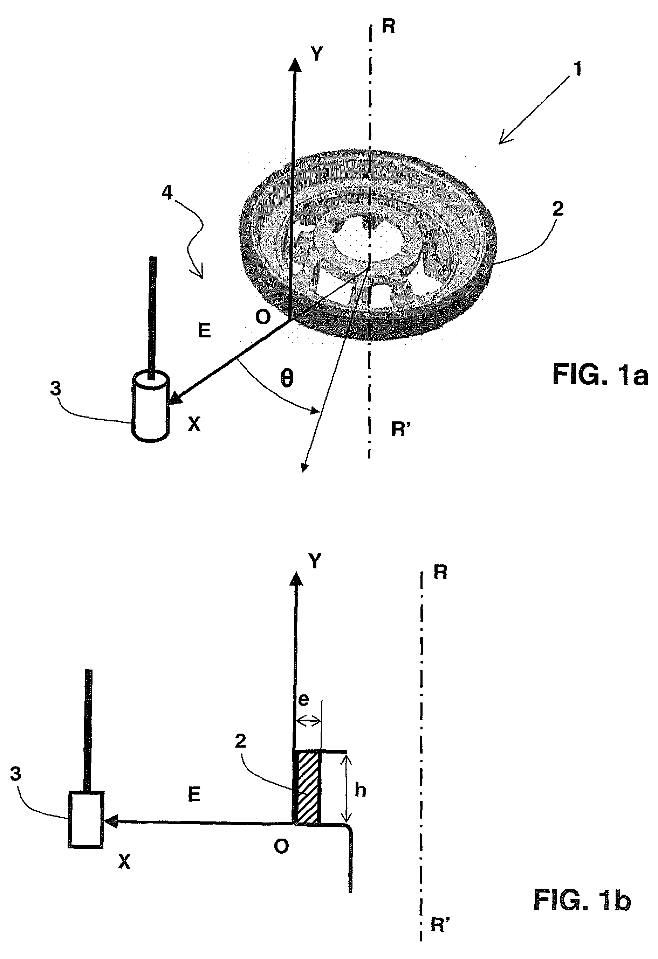

La **Figure 1a** montre les différents éléments du dispositif magnétique de détermination de position angulaire 1 produisant un signal sinusoïdal selon l'invention :
- un anneau magnétique multipolaire 2 cylindrique mobile en rotation autour d'un axe RR' et créant un champ magnétique variable en fonction d'un angle de rotation θ ;
- un capteur magnétique 3 placé dans ce champ ;
- un entrefer 4.

La coupe radiale partielle de la **Figure 1b** montre bien que l'anneau 2 présente une section rectangulaire d'épaisseur radiale e et de hauteur axiale h, et que la valeur de l'entrefer 4 est la distance E entre le capteur 3 et l'anneau magnétique multipolaire 2 dans le plan radial XOY.

La **Figure 1a** correspond également au schéma de principe d'un système de mesure permettant d'étudier les effets des déplacements du capteur 3 selon une direction radiale OX, ou axiale OY par rapport à l'anneau magnétique multipolaire 2 sur le niveau de magnétisation B mesuré par le capteur. L'origine O des déplacements est choisie sur le bord extérieur inférieur de l'anneau magnétique multipolaire 2.

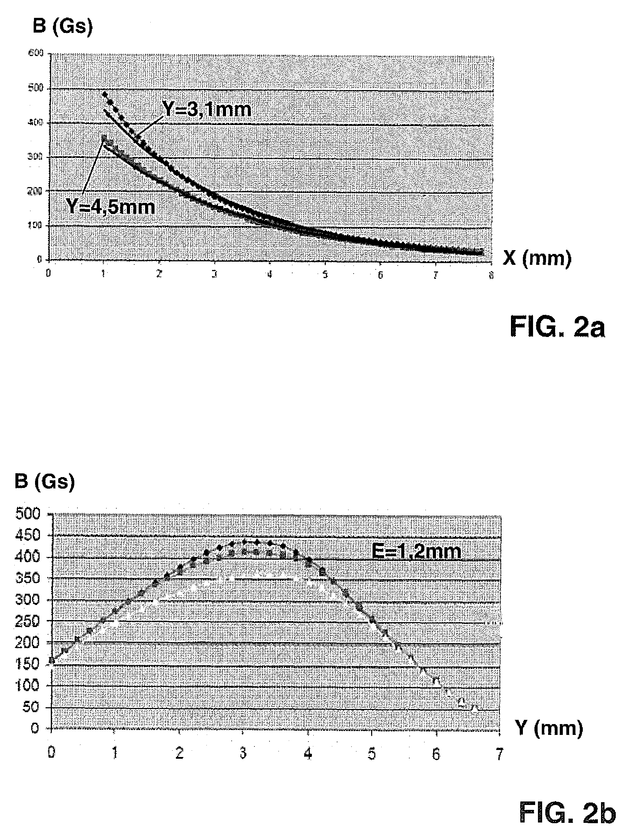

Ces effets seront maintenant étudiés en détail en liaison avec les **Figures 2a, 2b****,** **3****,** **5a, 5b****, et** **6****,** et permettront de bien comprendre l'invention.

Une première constatation est que, quelle que soit la matière constituant l'anneau magnétique multipolaire 2, le niveau de magnétisation B mesuré par le capteur 3 est d'autant plus petit que l'entrefer 4 est plus grand.

Deux exemples de décroissance en fonction de l'éloignement radial (axe X) du capteur 3 sont donnés sur la **Figure 2a****.**

La courbe supérieure représente le niveau de magnétisation B pour un premier décalage axial (selon Y) de 3,1 mm par rapport au bord inférieur O de l'anneau 2, tandis que la courbe inférieure représente ce niveau de magnétisation B pour un second décalage axial de 4,5mm.

Une autre constatation est que le niveau de magnétisation diminue en fonction de l'éloignement axial. Pour un entrefer E donné, le niveau de magnétisation B maximum est situé au milieu de la hauteur h de l'anneau magnétique 2 (l'anneau étant cylindrique) comme le montrent bien les courbes de la **Figure 2b****.** Ces courbes sont obtenues pour un entrefer constant de 1,2mm et trois diamètres différents de l'anneau magnétique multipolaire 2, de 50mm (courbe inférieure), 51 mm (courbe intermédiaire) et 52mm courbe supérieure).

Les effets des déplacements radiaux X et axiaux Y représentés sur les **Figures 2a et 2b****,** respectivement, correspondent aux effets des dispersions d'assemblage mécaniques, et l'on comprend que ces effets doivent être minimisés en production.

A ces dispersions mécaniques s'ajoutent les dispersions thermiques. Un anneau magnétique multipolaire 2 de ce type est soumis en fonctionnement à une température ambiante comprise typiquement entre -25°C et 175°C sur un véhicule automobile.

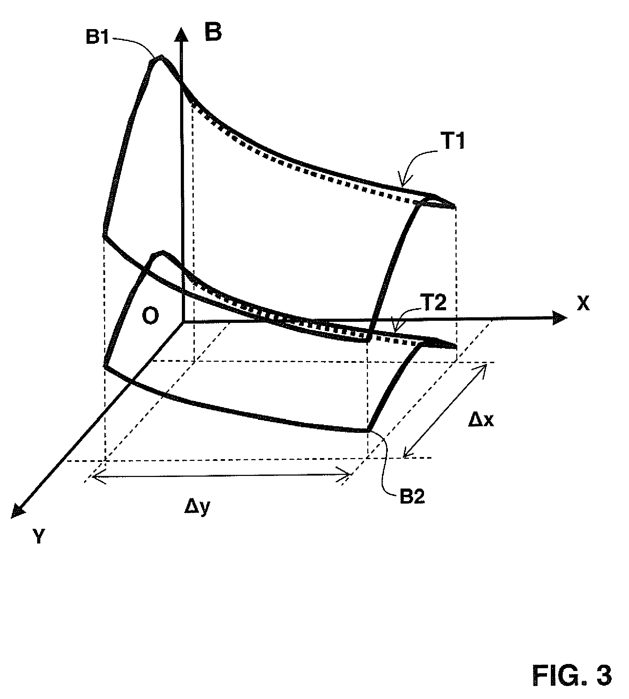

Les effets des déplacements radiaux X, axiaux Y et de la température ambiante T1, T2 sont représentés schématiquement sur la **Figure3**.

La magnétisation maximale B1 est obtenue quand l'anneau magnétique 2 est axialement centré et radialement au plus près du capteur 3 à une première température T1 de -25°C.

La magnétisation minimale B2 est obtenue quand l'anneau magnétique 2 est axialement décentré et éloigné au maximum du capteur 3 à une seconde température T2 de 175°C.

La connaissance du premier cas où la magnétisation B est au maximum B1, et du second cas où la magnétisation B est au minimum B2, permet de fixer les caractéristiques dimensionnelles et magnétiques du dispositif de détermination de position angulaire 1 selon l'invention de manière à ce qu'une valeur crête-crête du signal sinusoïdal produit soit égale à 4V dans le premier cas et à 1V dans le second cas (pour un capteur 3 alimenté sous 5V).

En toutes circonstances, le signal produit conserve alors une amplitude suffisante et appropriée pour attaquer le circuit de contrôle de la machine électrique tournante, sans qu'il soit nécessaire de l'écrêter, c'est-à-dire sans que des harmoniques soient générés.

Les mesures effectuées ont également montré que le niveau de magnétisation B était d'autant moins sensible aux dispersions mécaniques et thermiques des caractéristiques des éléments du dispositif 1 que l'épaisseur radiale e de l'anneau magnétique 2 était grande.

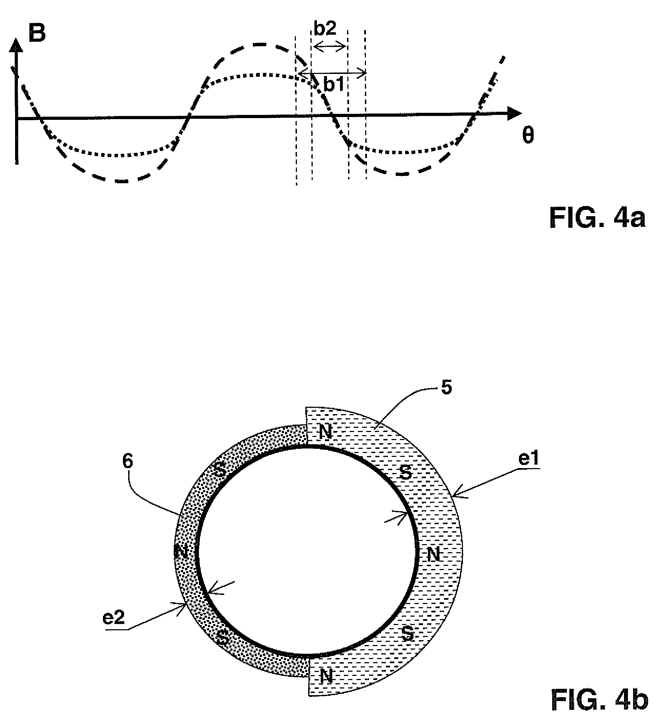

Comme le montre bien la **Figure 4a**, plus l'épaisseur radiale e est importante, plus l'effet de bord b1, b2 est important.

La courbe en tirets représentant les variations en fonction de la position angulaire θ du champ magnétique B créé par un premier exemple d'anneau magnétique 5 (représenté partiellement sur la **Figure 4b**) ayant une première épaisseur radiale e1 supérieure à une seconde épaisseur radiale e2 d'un second exemple d'anneau magnétique 6 (représenté aussi partiellement sur la **Figure 4b**) présente un effet de bord b1 plus grand que celui b2 présenté par la courbe en pointillés correspondant au second anneau 6.

Quand l'épaisseur radiale e est plus grande, le passage d'un pôle nord N à un pôle sud S est plus progressif, et, de ce fait, la forme d'onde du signal délivré par le capteur 3 se rapproche d'une sinusoïde.

La limite supérieure de l'épaisseur e admissible est fonction de la tenue mécanique du matériau magnétique constituant l'anneau 2 aux efforts centrifuges.

Cette limite supérieure est également fonction de la capacité des moyens de magnétisation à magnétiser une quantité de matière importante au moment de la magnétisation in situ de l'anneau magnétique multipolaire sur la chaîne de montage.

Il résulte des observations ci-dessus que, selon l'invention, l'épaisseur radiale e optimale de l'anneau magnétique 2 est comprise entre 1 mm et 5mm.

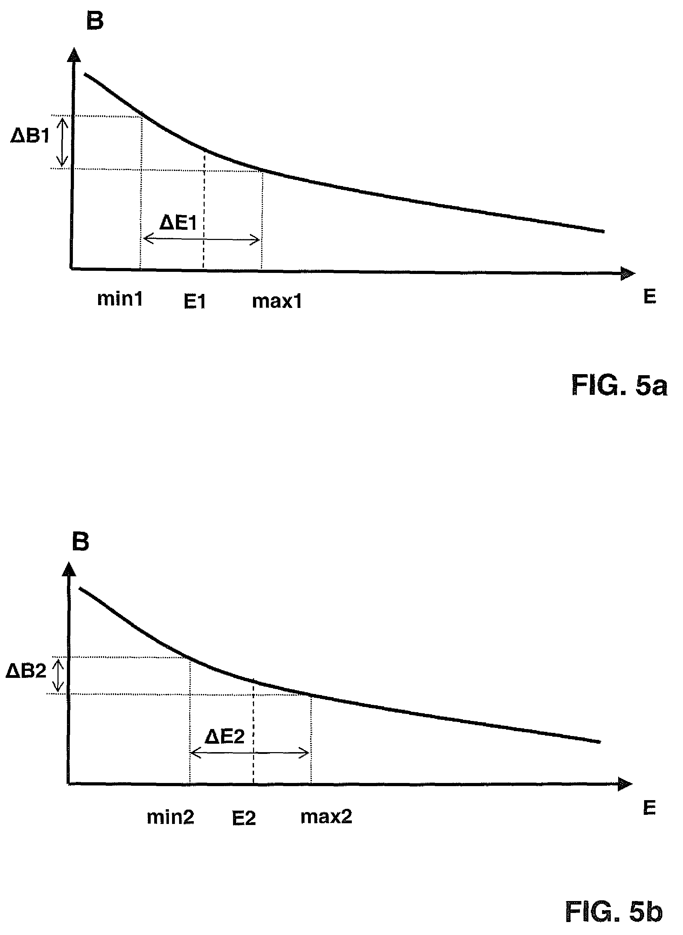

Les **Figures 5a et 5b** montrent également que la valeur E de l'entrefer 4 peut être choisie de manière optimale afin de rendre la valeur de crête du signal sinusoïdal produit par le dispositif magnétique de détermination de position angulaire 1 peu sensible à la dispersion d'assemblage mécanique de l'entrefer 4.

La **Figure 5a** montre une variation ΔB1 du niveau de magnétisation B mesuré par le capteur 3 quand la valeur E de l'entrefer 4 varie de ΔE1 autour d'une première valeur nominale E1.

La **Figure 5b** montre qu'une variation ΔB2 du niveau de magnétisation est plus faible quand la valeur E de l'entrefer 4 varie de la même valeur ΔE2=ΔE1 autour d'une seconde valeur nominale E2 supérieure à la première E1.

Par conséquent, le choix d'une limite basse de l'entrefer permet de limiter les variations du niveau d'induction B si l'entrefer 4 est à une cote maximale max1, max2 ou minimale min1, min2.

De plus cette limite basse de l'entrefer évite le risque d'interférence mécanique en cas d'assemblage aux cotes limites min1, min2.

Le niveau de magnétisation B vu par le capteur ne devant pas devenir trop faible, il existe une limite haute de l'entrefer en raison de la décroissance de ce niveau de magnétisation B quand l'entrefer E croît.

Selon l'invention, la limite basse de l'entrefer E est égale à 1mm et la limite haute de l'entrefer est égale à 4mm.

Il a été remarqué ci-dessus que l'épaisseur radiale e de l'anneau magnétique 2, et l'entrefer E étaient, selon l'invention, choisies respectivement de manière optimale dans deux plages de valeurs.

Ces deux plages sont avantageusement combinées en un seul critère portant sur un premier rapport e/E de l'épaisseur radiale e à la l'entrefer E.

Ce premier rapport e/H est compris entre 0,25 (plus faible épaisseur radiale possible sur limite haute de l'entrefer) et 5 (plus grande épaisseur radiale possible sur limite basse de l'entrefer).

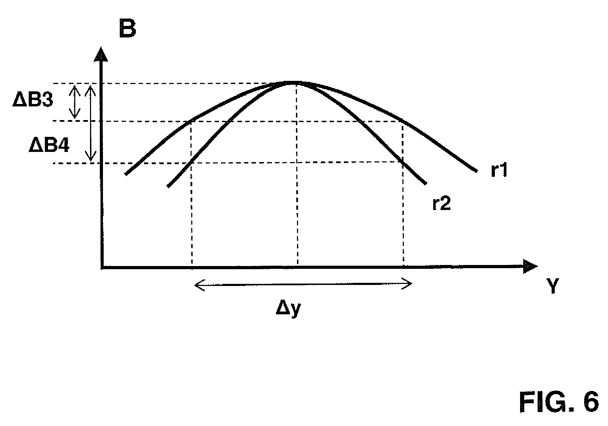

Comme le montre bien la **Figure 6****,** il a été aussi remarqué que plus l'épaisseur radiale e est faible devant la hauteur axiale h de l'anneau magnétique 2, plus l'impact de la dispersion axiale Δy de la position du capteur 3 sur le niveau de magnétisation B est faible, du fait de la moindre variation du champ au bord de l'anneau magnétique 2.

La courbe supérieure de la **Figure 6** correspond à une première valeur r1 d'un second rapport h/e plus grand qu'une seconde valeur r2 du second rapport h/e pour lequel la courbe inférieure a été tracée. Une même variation Δy de la position du capteur 3 dans la direction axiale OY conduit à une variation de l'induction ΔB3 inférieure à ΔB4.

Selon l'invention, ce second rapport h/e est compris entre 1,5 et 8.

L'épaisseur radiale e de l'anneau magnétique 2 ne doit pas être pas être trop faible comme il a été expliqué ci-dessus pour que l'ensemble émetteur (cible) / récepteur (capteur) reste robuste aux perturbations.

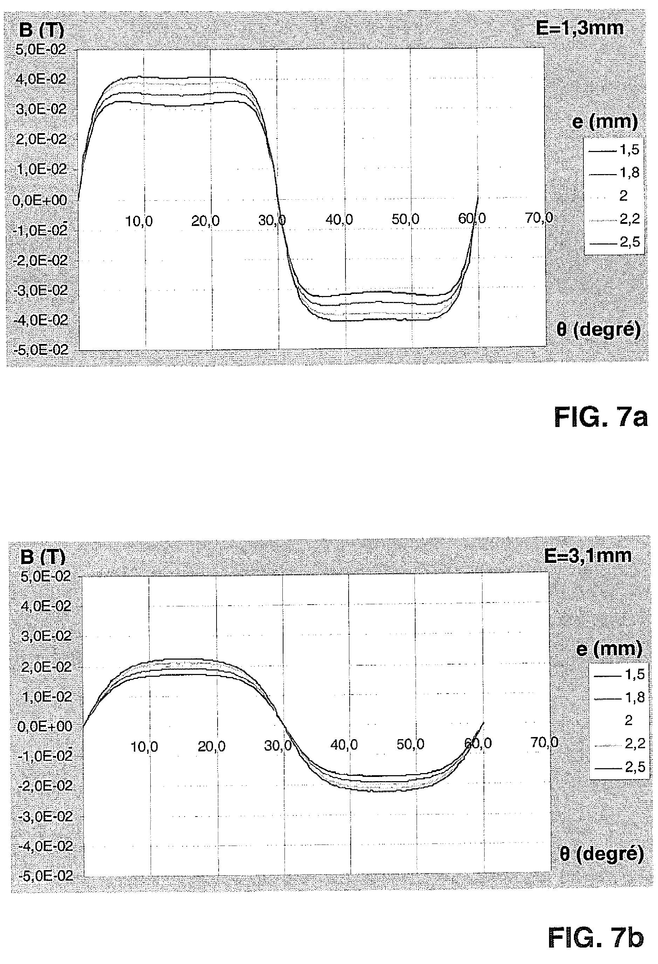

De plus, comme il le sera maintenant expliqué en liaison avec les **Figures 7a, 7b****,** **8a, 8b** **et** **9****,** le premier rapport de l'épaisseur radiale e de l'anneau magnétique 2 par rapport à l'entrefer E a une influence déterminante sur la forme d'onde du signal produit par le capteur 3.

La **Figure 7a** montre les variations en fonction de la position angulaire θ de l'anneau magnétique 2 du niveau de magnétisation B pour un entrefer E constant de 1,3mm et cinq épaisseurs radiales différentes de 1,5mm à 2,5mm.

La **Figure 7b** montre ces variations du niveau de magnétisation B pour un entrefer E constant de 3,1 mm.

On remarque que :
- pour un entrefer E donné, la forme d'onde se rapproche d'une sinusoïde quand l'épaisseur radiale e augmente ;
- pour une épaisseur radiale e donnée, la forme d'onde se rapproche d'une sinusoïde quand l'entrefer E augmente.

Afin de quantifier la pureté du signal sinusoïdal produit par le capteur 3, l'atténuation de chaque harmonique par rapport au fondamental a été mesurée.

Les résultats des mesures d'atténuation (en dB) des harmoniques de chaque rang sont présentés dans la table I pour un entrefer E constant de 1,3mm, et dans la table Il pour un entrefer E constant de 3,0mm, pour différentes valeurs d'épaisseur radiale e de 1,3mm à 3,0mm.

**Table I**

| | | **Entrefer:** | **1.3 mm** | | |
|---|---|---|---|---|---|
| Rang: | e=1,3 mm | e=1,8 mm | e=2,1 mm | e=2,5 mm | e= 3,0 mm |
| 2 | -70 dB | -70 dB | -80 dB | -65 dB | -60 dB |
| 3 | -10 dB | -10 dB | -11 dB | -12 dB | -12 dB |
| 4 | -71 dB | -71 dB | -70 dB | -59 dB | -55 dB |
| 5 | -18 dB | -18 dB | -20 dB | -21 dB | -21 dB |
| 6 | -71 dB | -71 dB | -76 dB | -61 dB | -55 dB |
| 7 | -26 dB | -26 dB | -27 dB | -28 dB | -29 dB |
| 8 | -70 dB | -70 dB | -66 dB | -58 dB | -54 dB |
| 9 | -32 dB | -32 dB | -34 dB | -35 dB | -36 dB |

**Table II**

| | | **Entrefer:** | **3,0 mm** | | |
|---|---|---|---|---|---|
| Rang: | e=1,3 mm | e=1,8 mm | e=2,1 mm | e=2,5 mm | e= 3,0 mm |
| 2 | -64 dB | -68 dB | -65 dB | -58 dB | -62 dB |
| 3 | -15 dB | -16 dB | -17 dB | -17 dB | -17 dB |
| 4 | -69 dB | -65 dB | -61 dB | -63 dB | -60 dB |
| 5 | -29 dB | -30 dB | -31 dB | -31 dB | -32 dB |
| 6 | -72 dB | -60 dB | -62 dB | -72 dB | -58 dB |
| 7 | -43 dB | -44 dB | -44 dB | -46 dB | -48 dB |
| 8 | -74 dB | -68 dB | -68 dB | -69 dB | -63 dB |
| 9 | -56 dB | -53 dB | -57 dB | -64 dB | -69 dB |

Ces mesures confirment les constations faites à partir des formes d'onde des **Figures 7a et 7b** : les harmoniques (notamment de rang impair) sont d'autant plus atténués que l'épaisseur radiale e est plus grande et que l'entrefer E est plus important.

L'atténuation atteint 69dB pour l'harmonique de rang 9 quand l'épaisseur radiale e est égale à 3mm et quand l'entrefer E vaut 3mm, alors que l'atténuation de ce même harmonique n'est que de 32dB pour une épaisseur radiale e de 1,3mm et un entrefer E de 1,3mm.

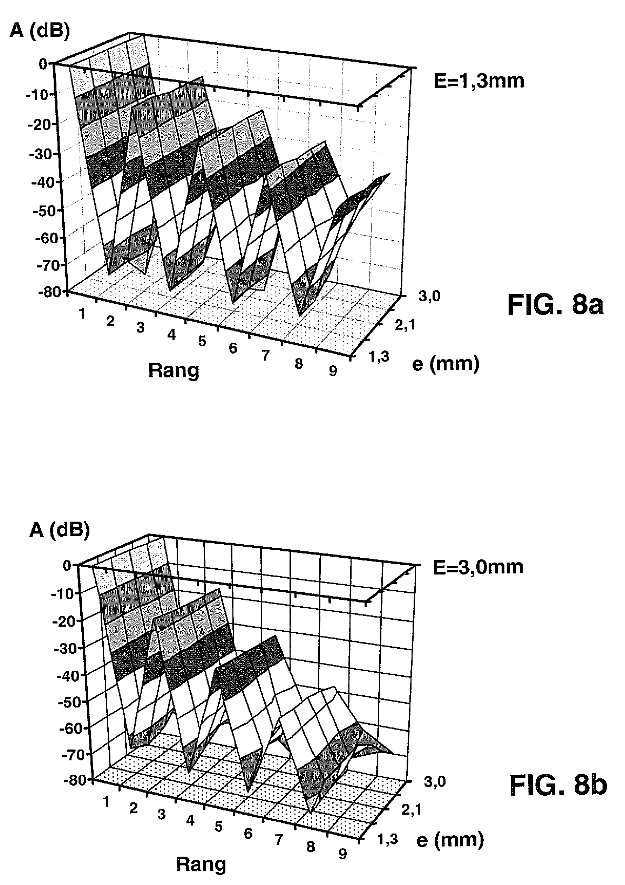

Les représentations graphiques des données des Tables I et II sur les **Figures 8a et 8b**, respectivement, montrent bien ce phénomène.

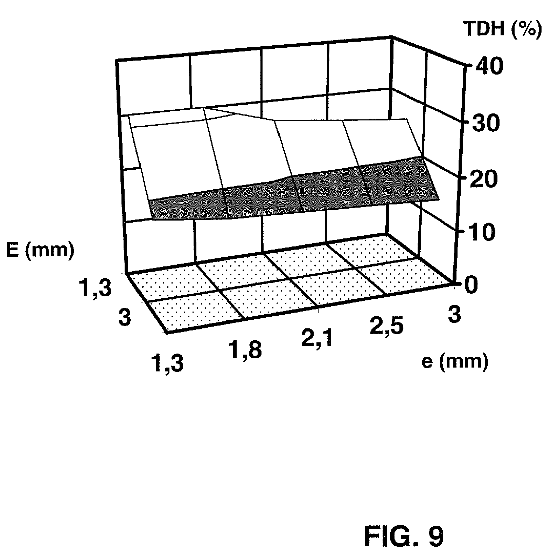

La **Figure 9** présente les résultats des mesures sous une forme encore plus synthétique en montrant les variations du taux de distorsion harmonique TDH du signal produit par le capteur 3 en fonction de l'entrefer E et de l'épaisseur radiale e.

Dans une plage de valeurs d'épaisseur radiale e comprise entre 1,3mm et 3mm, et une plage de valeurs d'entrefer E comprise entre 1,3mm et 3mm, c'est-à-dire une plage de valeurs du premier rapport e/E comprise entre 0,4 et 2,3, le TDH est inférieur à 30%.

En tenant compte de ce résultat, dans un mode de réalisation préféré, l'épaisseur e de l'anneau magnétique multipolaire 2 est égale à 1,5mm et l'entrefer est égal à 2mm, ce qui correspond à une valeur optimale du premier rapport e/E de 0,75.

Dans tous les modes de réalisation préférés de l'invention, l'anneau magnétique multipolaire 2 est constitué d'un matériau de type ferrite ou aux terres rares, dont le niveau de magnétisation (mesure axialement centrée) est de l'ordre de 500Gs à 800Gs en surface à 25°C.

L'anneau magnétique multipolaire 2 comportent plusieurs paires de pôles, de préférence 6 ou 8 paires de pôles.

Pour un nombre de paires de pôles donné, le rayon de l'anneau 2 influe sur la précision de la période du signal produit par le capteur 3 : plus le rayon est petit, et moins cette période est régulière.

Le rayon de l'anneau magnétique multipolaire est limité supérieurement par la tenue de celui-ci aux efforts centrifuges.

Ces deux contraintes, électrique ou cinétique, impliquent que le rayon extérieur de l'anneau magnétique multipolaire 2 soit compris entre 40mm et 80mm.

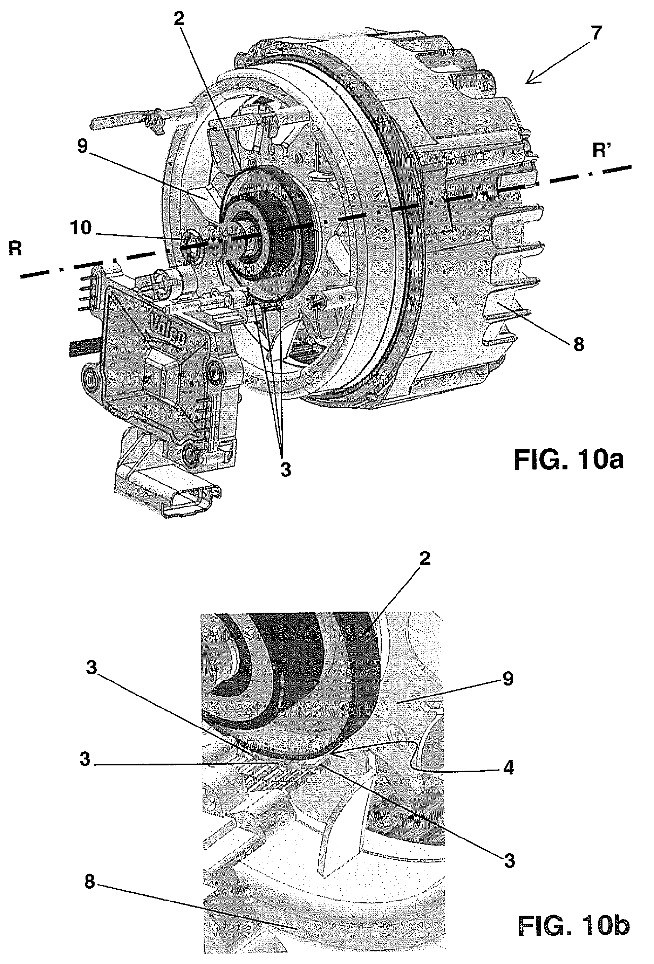

Le dispositif magnétique de détermination angulaire 1 selon l'invention est notamment avantageusement mis en oeuvre dans des machines électriques tournantes polyphasées du type de celle montrée sur la **Figure 10a****.**

L'alterno-démarreur 7 représenté sur la **Figure 10a** comprend classiquement un stator 8 et un rotor 9. Le capteur 3 du dispositif 1 est solidaire du stator 8, en vis-à-vis de l'anneau magnétique multipolaire 2 fixé axialement RR' en bout d'arbre 10 du rotor 9.

Comme le montre bien la **Figure 10b****,** l'alterno-démarreur 7 comprend trois capteurs magnétiques 3 séparés de l'anneau magnétique multipolaire 2 par un entrefer 4.

Conformément aux critères dimensionnels retenus par l'invention, la hauteur axiale h (dimension selon l'axe RR') de l'anneau magnétique 2 est grande par rapport à son épaisseur radiale e.

La **Figure 10b** montre aussi que l'épaisseur radiale e de l'anneau magnétique 2 monté sur le rotor 9 est de l'ordre de la dimension E de l'entrefer 4. De ce fait, le premier rapport e/E présente une valeur optimale, et les trois signaux générés par les capteurs magnétiques 3 présentent un taux de distorsion harmonique TDH réduit, qui les rend aptes à piloter avec précision les circuits électroniques de puissance effectuant la commutation des courant de phases de l'alterno-démarreur 7 fonctionnant en mode moteur, ou ceux réalisant le redressement synchrone quand l'alterno-démarreur 7 fonctionne en génératrice.

Comme il va de soi, l'invention ne se limite pas aux seuls modes d'exécution préférentiels décrits ci-dessus.

Les dimensions indiquées, les valeurs d'induction magnétique relevées, et les tensions spécifiées ne sont que des exemples. Les critères de conception d'un dispositif magnétique de détermination angulaire résultant de l'invention sont fournis sous forme de rapports dimensionnels, qui permettent d'appliquer l'invention en particulier à des machines électriques tournantes de toutes tailles.

L'invention embrasse donc toutes les variantes possibles de réalisation dans la limite de l'objet des revendications ci-après.

## Revendications

1. Dispositif magnétique de détermination de position angulaire (1) produisant un signal sinusoïdal du type de ceux comprenant :
- un anneau magnétique multipolaire (2) mobile en rotation autour d'un axe (R'R) et créant un champ magnétique (B) variable en fonction d'un angle de rotation (θ) ;
- un capteur magnétique (3) placé dans ledit champ magnétique (B) et générant ledit signal sinusoïdal ;
- un entrefer (4) constitué par un éloignement dudit capteur d'une distance E dudit anneau dans un plan radial (XOY) ;
**caractérisé en ce qu'**un premier rapport e/E d'une épaisseur e dudit anneau (2) dans une direction radiale (OX) audit entrefer E est compris entre 0,4 et 2,3 et un second rapport h/e d'une hauteur h dudit anneau (2) dans une direction axiale (OY) à ladite épaisseur e est compris entre 1,5 et 8.

2. Dispositif magnétique de détermination de position angulaire (2) produisant un signal sinusoïdal selon la revendication 1 précédente, **caractérisé en ce que** ladite épaisseur e est comprise entre 1 mm et 5mm.

3. Dispositif magnétique de détermination de position angulaire (2) produisant un signal sinusoïdal selon la revendication 1 ou 2 précédentes, **caractérisé en ce que** ledit entrefer E est compris entre 1 mm et 4mm.

4. Dispositif magnétique de détermination de position angulaire (2) produisant un signal sinusoïdal selon l'une quelconque des revendications 1 à 3 précédentes, **caractérisé en ce qu'**un rayon extérieur dudit anneau (2) est compris entre 40mm et 80mm.

5. Dispositif magnétique de détermination de position angulaire (2) produisant un signal sinusoïdal selon l'une quelconque des revendications 1 à 4 précédentes, **caractérisé en ce que** ledit anneau (2) est constitué d'élasto-ferrite.

6. Dispositif magnétique de détermination de position angulaire (2) produisant un signal sinusoïdal selon l'une quelconque des revendications 1 à 5 précédentes, **caractérisé en ce qu'**un niveau de magnétisation en surface dudit anneau (2) est compris entre 500Gs et 800Gs à 25° C.

7. Dispositif magnétique de détermination de position angulaire (2) produisant un signal sinusoïdal selon l'une quelconque des revendications 1 à 6 précédentes, caractérisé en ce ladite épaisseur e est sensiblement égale à 1,5mm, et en ce que ledit entrefer E est sensiblement égal à 2mm.

8. Dispositif magnétique de détermination de position angulaire (2) produisant un signal sinusoïdal selon l'une quelconque des revendications 1 à 7 précédentes, **caractérisé en ce qu'**une valeur crête-crête dudit signal est comprise entre 1V et 4V.

9. Machine électrique tournante polyphasée (7) comprenant un stator (8) et un rotor (9), **caractérisée en ce qu'**elle comprend en outre un dispositif magnétique de détermination de position angulaire (1) produisant un signal sinusoïdal selon l'une quelconque des revendications 1 à 9 précédentes, ledit capteur (3) étant solidaire dudit stator (8) et ledit anneau (2) étant fixé axialement (RR') sur ledit rotor (9).

## Patentansprüche

1. Magnetische Vorrichtung zur Winkelpositionsbestimmung (1), die ein sinusförmiges Signal erzeugt, von der Art, die enthält:
- einen mehrpoligen Magnetring (2), der um eine Achse (R'R) drehbeweglich ist und ein Magnetfeld (B) erzeugt, das abhängig von einem Drehwinkel (θ) variabel ist;
- einen Magnetfühler (3), der im Magnetfeld (B) angeordnet ist und das sinusförmige Signal erzeugt;
- einen Luftspalt (4), der aus einer Entfernung des Fühlers um einen Abstand E zum Ring in einer radialen Ebene (XOY) besteht;
**dadurch gekennzeichnet, dass** ein erstes Verhältnis e/E einer Dicke e des Rings (2) in einer radialen Richtung (OX) zum Luftspalt E zwischen 0,4 und 2,3 liegt, und ein zweites Verhältnis h/e einer Höhe h des Rings (2) in einer axialen Richtung (OY) zur Dicke e zwischen 1,5 und 8 liegt.

2. Magnetische Vorrichtung zur Winkelpositionsbestimmung (2), die ein sinusförmiges Signal erzeugt, nach dem vorhergehenden Anspruch 1, **dadurch gekennzeichnet, dass** die Dicke e zwischen 1 mm und 5 mm liegt.

3. Magnetische Vorrichtung zur Winkelpositionsbestimmung (2), die ein sinusförmiges Signal erzeugt, nach dem vorhergehenden Anspruch 1 oder 2, **dadurch gekennzeichnet, dass** der Luftspalt E zwischen 1 mm und 4 mm liegt.

4. Magnetische Vorrichtung zur Winkelpositionsbestimmung (2), die ein sinusförmiges Signal erzeugt, nach einem der vorhergehenden Ansprüche 1 bis 3, **dadurch gekennzeichnet, dass** ein Außenradius des Rings (2) zwischen 40 mm und 80 mm liegt.

5. Magnetische Vorrichtung zur Winkelpositionsbestimmung (2), die ein sinusförmiges Signal erzeugt, nach einem der vorhergehenden Ansprüche 1 bis 4, **dadurch gekennzeichnet, dass** der Ring (2) aus Elastoferrit besteht.

6. Magnetische Vorrichtung zur Winkelpositionsbestimmung (2), die ein sinusförmiges Signal erzeugt, nach einem der vorhergehenden Ansprüche 1 bis 5, **dadurch gekennzeichnet, dass** ein Magnetisierungspegel an der Oberfläche des Rings (2) zwischen 500Gs und 800Gs bei 25°C liegt.

7. Magnetische Vorrichtung zur Winkelpositionsbestimmung (2), die ein sinusförmiges Signal erzeugt, nach einem der vorhergehenden Ansprüche 1 bis 6, **dadurch gekennzeichnet, dass** die Dicke e im Wesentlichen gleich 1,5 mm ist, und dass der Luftspalt E im Wesentlichen gleich 2 mm ist.

8. Magnetische Vorrichtung zur Winkelpositionsbestimmung (2), die ein sinusförmiges Signal erzeugt, nach einem der vorhergehenden Ansprüche 1 bis 7, **dadurch gekennzeichnet, dass** eine Spitze-Spitze-Wert des Signals zwischen 1V und 4V liegt.

9. Drehende elektrische Mehrphasen-Maschine (7), die einen Stator (8) und einen Rotor (9) enthält, **dadurch gekennzeichnet, dass** sie außerdem eine magnetische Vorrichtung zur Winkelpositionsbestimmung (1), die ein sinusförmiges Signal erzeugt, nach einem der vorhergehenden Ansprüche 1 bis 9 enthält, wobei der Fühler (3) fest mit dem Stator (8) verbunden und der Ring (2) axial (RR') am Rotor (9) befestigt ist.

## Claims

1. Magnetic device for determining an angular position (1) producing a sinusoidal signal of the type of those comprising:
- a multipole magnetic ring (2) rotationally mobile about an axis (R'R) and creating a magnetic field (B) that is variable as a function of a rotation angle (θ);
- a magnetic sensor (3) placed in said magnetic field (B) and generating said sinusoidal signal;
- an air gap (4) consisting of a separation of said sensor by a distance E from said ring in a radial plane (XOY) ;
**characterized in that** a first ratio e/E of a thickness e of said ring (2) in a radial direction (OX) to said air gap E lies between 0.4 and 2.3 and a second ratio h/e of a height h of said ring (2) in an axial direction (OY) to said thickness e lies between 1.5 and 8.

2. Magnetic device for determining an angular position (2) producing a sinusoidal signal according to the preceding Claim 1, **characterized in that** said thickness e lies between 1 mm and 5 mm.

3. Magnetic device for determining an angular position (2) producing a sinusoidal signal according to the preceding Claims 1 or 2, **characterized in that** said air gap E lies between 1 mm and 4 mm.

4. Magnetic device for determining an angular position (2) producing a sinusoidal signal according to any one of the preceding Claims 1 to 3, **characterized in that** an outer radius of said ring (2) lies between 40 mm and 80 mm.

5. Magnetic device for determining an angular position (2) producing a sinusoidal signal according to any one of the preceding Claims 1 to 4, **characterized in that** said ring (2) is made of elasto-ferrite.

6. Magnetic device for determining an angular position (2) producing a sinusoidal signal according to any one of the preceding Claims 1 to 5, **characterized in that** a level of surface magnetization of said ring (2) lies between 500 Gs and 800 Gs at 25°C.

7. Magnetic device for determining an angular position (2) producing a sinusoidal signal according to any one of the preceding Claims 1 to 6, **characterized in that** said thickness e is substantially equal to 1.5 mm, and **in that** said air gap E is substantially equal to 2 mm.

8. Magnetic device for determining an angular position (2) producing a sinusoidal signal according to any one of the preceding Claims 1 to 7, **characterized in that** a peak-to-peak value of said signal lies between 1 V and 4 V.

9. Polyphase rotary electric machine (7) comprising a stator (8) and a rotor (9), **characterized in that** it further comprises a magnetic device for determining an angular position (1) producing a sinusoidal signal according to any one of the preceding Claims 1 to 9, said sensor (3) being secured to said stator (8) and said ring (2) being fixed axially (RR') onto said rotor (9).
